# EUROPÄISCHE PATENTANMELDUNG

(11) **EP 4 273 202 A1**
(43) Veröffentlichungstag der Anmeldung: **08.11.2023**
(21) Anmeldenummer: 23171943.6
(22) Anmeldetag: 05.05.2023
(51) Int. Cl.: C09J 7/38, C09J 7/10

(54) **VERFAHREN ZUR HERSTELLUNG DÜNNER HAFTKLEBEBÄNDER**

(30) Priorität: 06.05.2022 DE 102022111384
(71) Anmelder: tesa SE, 22848 Norderstedt (DE)
(72) Erfinder: GRITTNER, Norbert, 22459 Hamburg (DE); KUSS, Karsten, 22455 Hamburg (DE); PETERSEN, Anika, 24598 Heidmühlen (DE)
(74) Vertreter: tesa SE

(57) **Zusammenfassung**

Die Erfindung betrifft ein Verfahren zur Herstellung eines Haftklebebandes, umfassend die Verfahrensschritte: a) Herstellen oder Bereitstellen eines bahnförmigen Ausgangsverbundes (10) umfassend: i) eine bahnförmige erste Trägerschicht (12), und ii) eine auf der ersten Trägerschicht (12) angeordnete bahnförmige Ausgangsklebeschicht (14), umfassend eine chemisch zumindest teilweise unvernetzte Haftklebemasse, b) Führen des Ausgangsverbundes (10) mit einer ersten Führungsanordnung (16), wobei der Ausgangsverbund (10) in Bahnrichtung mit der Geschwindigkeit v₁ geführt wird, c) Abziehen der Haftklebemasse von der ersten Trägerschicht (12) und Übertragen der abgezogenen Haftklebemasse auf eine bahnförmige zweite Trägerschicht (18) zum Erhalt eines bahnförmigen Klebeverbundes (20), wobei der Klebeverbund (20) mit einer zweiten Führungsanordnung (22) in Bahnrichtung mit der Geschwindigkeit v₂ geführt wird, wobei das Geschwindigkeitsverhältnis v₂/v₁ größer ist als 1, sodass die Haftklebemasse beim Übertragen zwischen der ersten Trägerschicht (12) und der zweiten Trägerschicht (18) in Folge des Geschwindigkeitsverhältnisses verstreckt wird, sodass im Klebeverbund (20) eine Klebeschicht (24) mit einer gegenüber der Ausgangsklebeschicht (14) verringerten mittleren Dicke erhalten wird, wobei das Abziehen der Haftklebemasse durch das Verstrecken der Haftklebemasse befördert oder bewirkt wird, und d) Relaxieren der verstreckten Haftklebemasse in der Klebeschicht (24).

## Beschreibung

Die Erfindung betrifft ein Verfahren zur Herstellung eines Haftklebebandes, welches insbesondere zur Herstellung von dünnen Haftklebebändern geeignet ist. Offenbart werden zudem ein entsprechendes Haftklebeband und eine Vorrichtung zur Durchführung des Verfahrens.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar.

Für zahlreiche technischen Anwendungen sind dabei insbesondere Haftklebebänder relevant, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Angesichts eines grundsätzlichen Bestrebens danach, Material einzusparen und das Gewicht von Produkten zu reduzieren, besteht insbesondere für bestimmte Anwendungen ein stetes Interesse daran, sehr dünne Haftklebebänder herzustellen, die insbesondere über eine dünne Klebeschicht verfügen, die bei geringem Materialbedarf, niedrigem Gesamtvolumen und vorteilhaftem Eigengewicht trotzdem die notwendige Klebeleistung erbringt. In der Praxis ist die Herstellung besonders dünner Klebeschichten jedoch regelmäßig mit großen Herausforderungen verknüpft. Die den Klebschichten zugrundeliegenden, zumeist lösemittelfreien, haftklebrigen Polymerbahnen können im Rahmen von herkömmlichen Beschichtungsverfahren, welche zumeist auf den Einsatz von mit Walzen ausgerüsteten Glättwerken setzen, regelmäßig nur bis zu einer gewissen Minimaldicke gefertigt werden. Die für die Herstellung von dünneren Klebschichten notwendigen Spaltkräfte steigen mit abnehmender Dicke der Klebeschicht immer weiter an. Hierdurch steigen die Anforderungen an die mechanischen Eigenschaften der im Glättwerk eingesetzten Walzen, insbesondere an deren Biegesteifigkeit und/oder die Schließkräfte des Walzenspaltes. Hieraus können ungewollte Abweichungen vom angestrebten mittleren Flächengewicht über die Breite der Klebeschicht resultieren bzw. es kann dazu führen, dass das Querprofil durch die Klebeschicht eine ausgeprägte Mittenbetonung aufweisen, durch die es von der zumeist gewünschten rechteckigen Form abweicht. Entsprechende Haftklebebänder mit einer inhomogenen Klebeschicht genügen jedoch regelmäßig nicht den Anforderungen, die insbesondere in Bezug auf anspruchsvolle Endanwendungen gestellt werden, und sind somit in vielen Fällen unverkäuflich.

Die vorstehend beschriebene Problematik ergibt sich insbesondere auch bei solchen Klebeschichten, bei denen geschäumte Klebemassen, insbesondere syntaktisch geschäumte Klebemassen, eingesetzt werden. Entsprechend ist eine zuverlässige Herstellung von derartigen Haftklebebändern mit dünnen Klebeschichten insbesondere für diese an sich vorteilhaften Systeme besonders herausfordernd.

Neben den vorstehend beschriebenen praktischen Problemen bei der Herstellung besonders dünner Klebeschichten besteht bei vielen herkömmlichen Herstellungsverfahren, welche beispielsweise auf die Ausformung der Klebeschicht mit einem Glättwerk zurückgreifen, regelmäßig eine Problematik darin, dass eine schnelle Umstellung des Fertigungsprozesses auf andere Dicken der Klebeschicht vergleichsweise aufwendig sein kann und neben der Einstellung des Walzenspalts unter anderem auch den Austausch der zur Ausformung verwendeten Walzen erfordern kann, um beispielsweise die nötige Biegesteifigkeit zu gewährleisten, um nach der Fertigung von vergleichsweise dicken Klebeschichten auf eine Produkt mit dünner Klebeschicht umzustellen. Eine entsprechende Umstellung ist dabei insbesondere zumeist nicht im laufenden Betrieb möglich, sondern erfordert eine Unterbrechung der Fertigung.

Die primäre Aufgabe der vorliegenden Erfindung war es, die vorstehend beschriebenen Nachteile des Standes der Technik auszuräumen oder zumindest zu verringern.

Insbesondere war es die Aufgabe der vorliegenden Erfindung, ein Verfahren zur Herstellung eines Haftklebebandes anzugeben, mit welchem vorteilhafte Haftklebebänder mit besonders dünnen Klebeschichten erhalten werden können. Hierbei war es eine Aufgabe der vorliegenden Erfindung, dass die mit dem anzugebenden Verfahren hergestellten Haftklebebänder mit möglichst gleichmäßig ausgeformten Klebeschichten, insbesondere mit einem gleichmäßigen Querschnittprofils, herstellbar sein sollten. Hierbei war es eine wünschenswerte Vorgabe der vorliegenden Erfindung, dass die klebtechnischen Eigenschaften der zur Herstellung verwendeten Haftklebemasse durch das anzugebende Verfahren nicht oder zumindest nur im geringen Maße nachteilig beeinflusst werden sollten und dass insgesamt leistungsstarke Haftklebebänder erhalten werden können.

Es war eine weitere Aufgabe der vorliegenden Erfindung, dass das anzugebende Verfahren eine vorteilhafte Umrüstbarkeit aufweisen sollte, die bei der Herstellung von Haftklebebändern einen schnellen Produktwechsel und eine unkomplizierte Umstellung auf eine andere Schichtdicke der Klebeschicht ermöglicht.

Es war eine ergänzende Aufgabe der vorliegenden Erfindung, dass das anzugebende Verfahren kontinuierlich und idealerweise mit einem hohen Umsatz betreibbar sein sollte, wobei das anzugebende Verfahren wünschenswerterweise über eine hohe Prozess- und Arbeitssicherheit verfügen sollte. Insoweit war es wünschenswert, dass das anzugebende Verfahren mit möglichst wenig apparativen Umbaumaßnahmen durch Einsatz von Vorrichtungskomponenten realisierbar sein sollte, die im Bereich der Klebtechnik regelmäßig eingesetzten werden. Zudem war es eine Aufgabe, dass das anzugebende Verfahren für im Wesentlichen alle Arten von Haftklebemassen einsetzbar sein sollte.

Es war eine weitere Aufgabe der vorliegenden Erfindung, ein entsprechendes Haftklebeband anzugeben, welches mit dem anzugebenden Verfahren hergestellt wurde, beziehungsweise herstellbar ist, und welches entsprechend mit besonders dünnen und dabei gleichmäßigen Klebeschichten hergestellt werden kann.

Es war eine sekundäre Aufgabe der vorliegenden Erfindung, eine Vorrichtung zur Durchführung des anzugebenden Verfahrens anzugeben.

Die Erfinder der vorliegenden Erfindung haben nunmehr gefunden, dass sich die vorstehend beschriebenen Aufgaben überraschenderweise lösen lassen, wenn in einem Verfahren zur Herstellung eines Haftklebebandes eine bahnförmige Ausgangsklebeschicht, welche eine chemisch zumindest teilweise unvernetzte Haftklebemasse umfasst und welche in einer Führungsanordnung mit der Geschwindigkeit v₁ geführt wird, auf eine zweite Führungsanordnung übertragen wird, und in dieser mit einer höheren Geschwindigkeit v₂ geführt wird, sodass die Haftklebemasse beim Übertragen verstreckt und in der Dicke verringert wird, wobei die infolge des Verstreckens reduzierte Haftklebrigkeit der Haftklebemasse bzw. die auf diese Weise erzeugte Anisotropie der Haftklebrigkeit in Kombination mit der beim Verstrecken erzeugten Spannung das Abziehen und Übertragen befördert, sofern die derart verstreckte Klebemasse anschließend zumindest teilweise relaxiert wird um die Haftklebrigkeit bzw. deren Anisotropie wiederherzustellen, wie es in den Ansprüchen definiert ist.

In anderen Worten wird die haftklebrige Klebemasse beispielsweise von einem ersten Liner auf einen zweiten Liner übertragen, welcher über eine mit Voreilung laufende Walze geführt wird, sodass sich in Bahnrichtung eine Streckung ergibt, die in synergistischer Weise die Haftklebrigkeit der verstreckten Haftklebemasse reduziert, sodass eine leichte Ablösung der Klebemasse vom ersten Liner befördert wird, so dass insbesondere wenn diese Liner mit einer Release-Beschichtung versehen sind, ein besonders zuverlässiges Abziehen gewährleistet werden kann. Insbesondere bei großen Streckraten kann die Reduktion der Haftklebrigkeit dabei vorteilhafterweise so ausgeprägt sein, dass auf für Haftklebemassen mit einer sehr hohen Klebekraft und/oder bei nicht releasebeschichteten Linern, ein effizientes Abziehen möglich wird. Somit wird die Haftklebrigkeit, welche der Umsetzung von vielen aus dem Stand der Technik bekannten Verfahren der Kunststoffbearbeitung für Haftklebemassen sonst häufig entgegensteht, in vorteilhafter Weise temporär zumindest teilweise reduziert und anschließend erst im Zuge einer Relaxierung wiederhergestellt.

In vorteilhafter Weise verringert sich bei diesem spezifischen Vorgehen die Dicke der Klebeschicht in etwa proportional zum Verhältnis der Bahngeschwindigkeiten v₁ und v₂, d. h. der Bahngeschwindigkeiten vor beziehungsweise nach dem Streckwerk. Durch dieses Verfahren, welches beispielsweise unmittelbar nach der Ausformung der Klebeschicht angeschlossen werden kann, beispielsweise unmittelbar hinter einem zur Ausformung verwendeten Glättwerk, wird die Herstellung von Klebeschichten mit sehr geringen Schichtdicken, beispielsweise von deutlich unter 200 µm, in hoher Präzision möglich. Hierdurch wird es in synergistischer Weise möglich, den dem Streckwerk vorgeschalteten Prozess im Wesentlichen ohne Rücksicht auf die final angestrebte Dicke des Endprodukts zu fahren und diesen vielmehr auf eine maximale Stabilität und Effizienz auszulegen, indem bis zum Streckwerk lediglich solche Dicken der Klebeschicht eingestellt werden, die verfahrenstechnisch besonders leicht zu handhaben sind. Hierdurch werden insbesondere die Anforderungen an die eingesetzten Gerätschaften stark verringert.

Zudem können mit diesem Verfahren verschiedene Haftklebebänder mit unterschiedlichen Dicken der Klebeschicht hergestellt werden, ohne dass die Einstellungen bei der Herstellung des Ausgangsverbundes, beispielsweise hinsichtlich der Walzen des Glättwerkes, verändert werden müssen, wobei die Einstellung der Dicke vorteilhafterweise über eine Steuerung der Geschwindigkeiten möglich ist, sodass eine Umstellung der Schichtdicken auch im laufenden Betrieb erfolgen kann. Hierdurch entfallen die zeit- und kostentechnisch wenig effizienten Ab- und Anfahrprozesse bzw. aufwendige Parameteränderungen am Glättwerk, welches wiederum auf eine optimale Schichtdickenpräzision im Ausgangsverbund ausgerichtet werden kann, wobei sich die derart erhaltene große Schichtdickenpräzision vorteilhafterweise auf das hergestellte Haftklebeband mit dünner Schicht überträgt.

Die vorstehend genannten Aufgaben werden entsprechend durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Klebebänder und Vorrichtungen ergeben sich aus den Merkmalen bevorzugter Verfahren.

Die Erfindung betrifft ein Verfahren zur Herstellung eines Haftklebebandes, umfassend die Verfahrensschritte:
a) Herstellen oder Bereitstellen eines bahnförmigen Ausgangsverbundes umfassend: i) eine bahnförmige erste Trägerschicht, und ii) eine auf der ersten Trägerschicht angeordnete bahnförmige Ausgangsklebeschicht, umfassend eine chemisch zumindest teilweise unvernetzte Haftklebemasse,
b) Führen des Ausgangsverbundes mit einer ersten Führungsanordnung, wobei der Ausgangsverbund in Bahnrichtung mit der Geschwindigkeit v₁ geführt wird,
c) Abziehen der Haftklebemasse von der ersten Trägerschicht und Übertragen der abgezogenen Haftklebemasse auf eine bahnförmige zweite Trägerschicht zum Erhalt eines bahnförmigen Klebeverbundes, wobei der Klebeverbund mit einer zweiten Führungsanordnung in Bahnrichtung mit der Geschwindigkeit v₂ geführt wird, wobei das Geschwindigkeitsverhältnis v₂/v₁ größer ist als 1, sodass die Haftklebemasse beim Übertragen zwischen der ersten Trägerschicht und der zweiten Trägerschicht in Folge des Geschwindigkeitsverhältnisses verstreckt wird, sodass im Klebeverbund eine Klebeschicht mit einer gegenüber der Ausgangsklebeschicht verringerten mittleren Dicke erhalten wird, wobei das Abziehen der Haftklebemasse durch das Verstrecken der Haftklebemasse befördert oder bewirkt wird, und
d) Relaxieren der verstreckten Haftklebemasse in der Klebeschicht.

Der Fachmann versteht im Lichte der vorstehenden Ausführungen, dass die Erfindung auch das entsprechende Haftklebeband betrifft, welches mit dem erfindungsgemäßen Verfahren herstellbar ist. Das erfindungsgemäße Haftklebeband kann dabei zu einem beliebigen Zeitpunkt nach Verfahrensschritt d) erhalten werden, wobei wie nachfolgend beschrieben zuvor auch weitere Verfahrensschritte durchgeführt werden können. Das Haftklebeband kann dabei insbesondere als trägerloses Haftklebeband erhalten werden, indem die zweite Trägerschicht als Liner, d.h. als Trennlage, ausgeführt wird, wie es nachfolgend offenbart ist, was in der Praxis besonders bevorzugt ist. Alternativ kann das Verfahren so geführt werden, dass die zweite Trägerschicht so gewählt wird, dass diese im späteren Haftklebeband den Träger bilden kann, der im Unterschied zu der auf eine leichte Ablösung ausgelegten Trennlage fest mit der Haftklebelage verbunden ist. Die Erfindung betrifft entsprechend auch ein Haftklebeband, hergestellt oder herstellbar mit dem erfindungsgemäßen Verfahren, umfassend zumindest eine aus der Klebeschicht abgeleitete Haftklebelage und optional eine Trägerlage oder eine Trennlage, wobei die Trägerlage oder die Trennlage bevorzugt von der zweiten Trägerschicht abgeleitet ist. Beispielhaft ist entsprechend ein erfindungsgemäßes Verfahren, wobei das Haftklebeband die zweite Trägerschicht als Trägerlage des Haftklebebandes umfasst. Beispielhaft ist alternativ ein erfindungsgemäßes Verfahren, wobei das Haftklebeband keine Trägerlage umfasst, wobei die Klebelage auf einer Trennlage angeordnet ist. Beispielhaft ist ein erfindungsgemäßes Verfahren, wobei das Haftklebeband nach der Herstellung aufgerollt wird.

Der Fachmann versteht, dass das erfindungsgemäße Verfahren und das erfindungsgemäße Haftklebeband eng miteinander verbunden sind. Zur Vermeidung von Unklarheiten und zum Zwecke der klaren Identifikation werden im Rahmen der vorliegenden Erfindung jedoch bewusst unterschiedliche Begriffe für die jeweiligen Schichten gewählt. Während im Verfahren Trägerschichten und Klebeschichten definiert werden, umfasst das Haftklebeband eine Haftklebelage sowie optional eine Trägerlage bzw. eine Trennlage. Für den Fachmann ist dabei klar, dass die Klebeschicht des erfindungsgemäßen Verfahrens nach Entnahme des Haftklebebandes der Haftklebelage entspricht, wohingegen eine zusammen mit der Klebeschicht entnommene Trägerschicht zur Trägerlage bzw. Trennlage wird. Die für das erfindungsgemäße Verfahren offenbarten Merkmale der Klebeschicht lassen sich somit entsprechend auf die Haftklebelage der erfindungsgemäßen Haftklebebänder übertragen.

Insbesondere für den Fall von doppelseitigen Haftklebebändern relevant ist ein erfindungsgemäßes Verfahren, wobei auf der Oberfläche der Haftklebelage des Haftklebebandes nach der Herstellung ein bahnförmiges Trennmaterial, ein sogenannter Trennliner, angeordnet wird, wobei das Trennmaterial bevorzugt ausgewählt ist aus der Gruppe bestehend aus Polyethylen, Polypropylen, Polyethylenterephthalat, Papier und Kombinationen dieser Materialien, wobei das Trennmaterial besonders bevorzugt ein oder beidseitig mit einer Releaseschicht beschichtet ist, bevorzugt einer Silikon-Releaseschicht, wobei die Silikon-Releaseschicht ganz besonders bevorzugt herstellbar ist durch Vernetzung eines vernetzbaren Silikonsystems umfassend ein oder mehrere Polysiloxane.

In Verfahrensschritt a) wird zunächst ein bahnförmiger Ausgangsverbund hergestellt oder bereitgestellt. Dieser Ausgangsverbund ist bahnförmig, wie es im Bereich der Klebetechnik für Klebebänder oder Klebestreifen regelmäßig üblich ist, wobei im Anschluss an das erfindungsgemäße Verfahren beispielsweise auch eine Vereinzelung in Klebeetiketten oder ähnliche Produkte erfolgen kann. In Übereinstimmung mit dem fachmännischen Verständnis bedeutet der Ausdruck bahnförmig, dass es sich um ein flächiges Gebilde handelt, dessen Ausdehnung in der xy-Ebene deutlich größer ist als die Ausdehnung in der orthogonal zur xy-Ebene stehenden z-Richtung, wobei zudem die Ausdehnung innerhalb der xy-Ebene in eine Richtung signifikant größer ist als die Ausdehnung quer zu dieser Längsrichtung. In der Praxis ist es für den Fachmann unproblematisch festzustellen, ob ein Ausgangsverbund bahnförmig ist, da dies im Bereich der Klebebänder eine typische Form ist.

Der Ausgangsverbund umfasst zumindest zwei Komponenten, die wiederum bahnförmig sind. Hierbei handelt es sich um die erste Trägerschicht und eine Ausgangsklebeschicht, welche eine Haftklebemasse umfasst und daher selbst zumindest teilweise haftklebrig ist. Das erfindungsgemäße Verfahren kann vorteilhafterweise "off-line" eingesetzt werden, indem der entsprechende Ausgangsverbund, der beispielsweise von einem Zulieferer oder einer separaten Fertigungsstätte erhalten wird, lediglich bereitgestellt wird. Beispielhaft ist entsprechend ein erfindungsgemäßes Verfahren, wobei der bahnförmige Ausgangsverbund in Verfahrensschritt a) bereitgestellt wird, bevorzugt von einer Materialrolle. Gleichzeitig ist es jedoch problemlos möglich, das erfindungsgemäße Verfahren auch "in-line" in den Herstellungsprozess zu integrieren, sodass der Ausgangsverbund unmittelbar vor der Eingabe in das Streckwerk gemäß der Verfahrensschritte b) und c) hergestellt wird, beispielsweise nach Ausformung der Klebeschicht in einem Kalander oder einem Glättwerk. Diese Verfahrensführung ist mit Blick auf die Handhabungseigenschaften sowie die Zeit- und Kosteneffizienz besonders bevorzugt. Bevorzugt ist entsprechend ein erfindungsgemäßes Verfahren, wobei der bahnförmige Ausgangsverbund in Verfahrensschritt a) hergestellt wird durch Beschichtung der ersten Trägerschicht mit der chemisch zumindest teilweise unvernetzt Haftklebemasse, wobei das Beschichten bevorzugt ein Trocknen und/oder ein Abkühlen der chemisch zumindest teilweise unvernetzt Haftklebemasse umfasst, und/oder wobei der bahnförmige Ausgangsverbund in Verfahrensschritt a) hergestellt wird, wobei die Ausgangsklebeschicht in einem Kalander ausgeformt wird.

Die Ausgangsklebeschicht umfasst eine Haftklebemasse und wird in der Praxis in vielen Fällen sogar im Wesentlichen vollständig aus der Haftklebemasse bestehen. Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Daraus hergestellte Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Es wird davon ausgegangen, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G` und G" jeweils zumindest zum Teil im Bereich von 10³ bis 10⁷ Pa liegen.

Es kann als Vorteil des erfindungsgemäßen Verfahrens gesehen werden, dass dieses als Verarbeitungsverfahren im Wesentlichen losgelöst von der chemischen Natur der Haftklebemasse einsetzbar ist, zumindest insoweit diese chemisch zumindest teilweise unvernetzt und entsprechend relaxationsfähig ist, wie es vorstehend definiert ist. Insoweit ist es den Erfindern jedoch gelungen, (Co-)Polymere sowie mögliche Additive zu identifizieren, bei deren Einsatz sich im erfindungsgemäßen Verfahren besonders zuverlässige dünne Klebeschichten erhalten lassen. Bevorzugt ist nämlich ein erfindungsgemäßes Verfahren, wobei die Haftklebemasse ein oder mehrere (Co-)Polymere umfasst, wobei die (Co- )Polymere ausgewählt sind aus der Gruppe bestehend aus Poly(meth)acrylaten, Polyurethanen und Kautschuken, insbesondere Polyisopren-Kautschuken, Styrol-Butatien-Kautschuken, Ethylen-Propylen-Dien-Kautschuken, Polysiloxanen, Polyepoxiden und Isoprenkautschuken. Bevorzugt ist zusätzlich oder alternativ ein erfindungsgemäßes Verfahren, wobei die Haftklebemasse ein oder mehrere Additive umfasst, die ausgewählt sind aus der Gruppe bestehend aus Klebharzen und Füllstoffen. Bevorzugt ist darüber hinaus zusätzlich oder alternativ ein erfindungsgemäßes Verfahren, wobei die Haftklebemasse Lösungsmittel in einem Massenanteil von 10 % oder weniger, bevorzugt 1 % oder weniger, besonders bevorzugt 0,1 % oder weniger, umfasst, bezogen auf die Masse der Haftklebemasse.

Wie vorstehend erläutert, ist es insbesondere beim Einsatz von geschäumten Haftklebemassen mit den aus dem Stand der Technik bekannten Verfahren häufig schwer, besonders niedrige Schichtdicken in einer hohen Qualität zu erhalten. Da sich die Vorteile des erfindungsgemäßen Verfahrens, welches hinsichtlich der Verarbeitung von geschäumten Haftklebemassen vorteilhafterweise keine wesentlichen Einschränkung aufweist, in diesen Fällen besonders deutlich zeigen, ist es inhärent bevorzugt, entsprechende Haftklebemassen einzusetzen. Bevorzugt ist ein erfindungsgemäßes Verfahren, wobei die Haftklebemasse eine geschäumte Haftklebemasse ist, bevorzugt eine syntaktisch geschäumte Haftklebemasse.

Für das erfindungsgemäße Verfahren ist es nach Einschätzung der Erfinder wesentlich, dass die eingesetzte Haftklebemasse chemisch nicht vollständig vernetzt ist, da eine entsprechende vollständige chemische Vernetzung einer effizienten anschließenden Relaxation nach der Verstreckung im Wege stünde. In Übereinstimmung mit dem fachmännischen Verständnis weist eine chemisch zumindest teilweise unvernetzte Haftklebemasse eine makroskopische Relaxationsfähigkeit auf, d.h. die Fähigkeit nach einer mechanischen Verstreckung zu relaxieren, so dass bei der Verstreckung erzeugte Anisotropien in der Klebeschicht durch Relaxation mit der Zeit abgebaut werden können. Hierin unterschiedet sich die chemische Vernetzung von der gegebenenfalls auftretenden physikalischen Vernetzung, deren Einfluss der Fachmann zwanglos durch die Wahl der Prozessparameter, insbesondere der Verarbeitungstemperatur, handhaben kann, sodass eine gegebenenfalls vorhandene physikalische Vernetzung der Verstreckung und der Relaxation nicht im Wege steht.

Der Ausdruck der chemischen Vernetzung ist für den Fachmann klar und bezeichnet den im Bereich der Klebetechnik üblichen Schritt der Vernetzung einzelner (Co-)Polymere einer Haftklebemasse, beispielsweise über funktionelle Gruppen oder strahlungsinduzierte reaktive Stellen, welche in den jeweiligen (Co-)Polymeren vorliegen oder erzeugt werden und dafür vorgesehen sind, gegebenenfalls unter Einsatz eines chemischen Vernetzers und/oder bei Anwendung geeigneter Initiationsbedingungen, miteinander zu reagieren und dadurch den Verknüpfungsgrad im (Co-)Polymer zu steigern, wodurch sich die physikalisch-chemischen Eigenschaften, beispielsweise die Löslichkeit der vernetzten (Co-)Polymere oder die Kohäsion der Haftklebemasse, verändern und verzweigte (Co-)Polymere mit erhöhten Molekulargewichten bzw. durchgehenden Polymernetzwerken erhalten werden.

In der Praxis ist der Zustand der nicht-vollständigen chemischen Vernetzung für den Fachmann qualitativ unproblematisch aus den physikalisch-chemischen Eigenschaften der Haftklebemasse zu bestimmen, beispielsweise durch einfache Versuche zur Bestimmung des Relaxationsverhaltens, des Rückschrumpfes, der Löslichkeit oder durch rheologische Versuche. Im Rahmen der vorliegenden Erfindung wird eine Haftklebemasse im Zweifel dann als chemisch zumindest teilweise unvernetzt angesehen, wenn die Relaxationsfähigkeit der Haftklebemasse unter den in Verfahrensschritt d) gewählten Relaxationsbedingungen gegeben ist. Dies ist insbesondere der Fall, wenn die Haftklebemasse die Fähigkeit besitzt unter den in Verfahrensschritt d) gewählten Relaxationsbedingungen eine durch Verstreckung erzeugte makroskopische Anisotropie der physikalisch-chemischen Eigenschaften, insbesondere der Haftklebrigkeit, im Material über die Zeit durch Relaxation auszugleichen, so dass sich die entsprechenden makroskopischen Eigenschaften, insbesondere die Klebkraft oder der Rückschrumpf, zwischen der x-Richtung und der y-Richtung um 20 % oder weniger, bevorzugt um 10 % oder weniger, besonders bevorzugt um 5 % oder weniger, ganz besonders bevorzugt 1 % oder weniger, unterscheiden. Hierbei werden die in Verfahrensschritt d) gewählten Relaxationsbedingungen insbesondere durch die Relaxationstemperatur und die für die Relaxation zur Verfügung stehende Zeit definiert. Da es sich um eine relative Änderung handelt, kann der Fachmann insoweit auf im Wesentlichen jeden verfügbaren Test zurückgreifen, wobei im Zweifel die Relaxationsfähigkeit in Bezug auf die Wiederherstellung der Klebkraft, beispielsweise bestimmt nach DIN EN ISO 29862-2019, oder der Isotropie des Rückschrumpfes, bevorzugt der Isotropie des Rückschrumpfes, bewertet wird.

In anderen Worten ist die chemisch zumindest teilweise unvernetzte Haftklebemasse somit unter den in Verfahrensschritt d) gewählten Relaxationsbedingungen relaxierbar, so dass eine durch die Verstreckung erzeugte Anisotropie im Material mit der Zeit abgebaut und eine durch die Verstreckung reduzierte Haftklebrigkeit wiederhergestellt werden kann. Im Rahmen der vorliegenden Erfindung gilt eine Haftklebemasse in jedem Fall auch dann als chemisch zumindest teilweise unvernetzte Haftklebemasse, wenn die Relaxationsfähigkeit der Haftklebemasse unter den in Verfahrensschritt d) gewählten Relaxationsbedingungen 50 % oder mehr, bevorzugt 70 % oder mehr, besonders bevorzugt 90 % oder mehr, ganz besonders bevorzugt 99 % oder mehr, der Relaxationsfähigkeit der völlig unvernetzten Haftklebemasse beträgt, wobei auch hierbei im Zweifel die Relaxationsfähigkeit in Bezug auf die Fähigkeit zur Widerherstellung der Klebkraft, beispielsweise bestimmt nach DIN EN ISO 29862-2019, oder der Isotropie des Rückschrumpfes, bevorzugt der Isotropie des Rückschrumpfes, bewertet wird.

Der Fachmann versteht, dass eine vollständige chemische Vernetzung eine Relaxation unter den in Verfahrensschritt d) gewählten Relaxationsbedingungen verhindern würde, so dass sie einer erfolgreichen Durchführung des erfindungsgemäßen Verfahrens im Wege stünde, da die Relaxation zur Wiederherstellung der isotropen Eigenschaften benötigt wird. Entsprechend ist es für den Fachmann auch verständlich, dass eine besonders effiziente und vorteilhafte Verfahrensführung gerade dann realisiert werden kann, wenn der Vernetzungsgrad der unvernetzten Haftklebemasse möglichst niedrig und entsprechend die Relaxationsfähigkeit besonders hoch ist. Gleichzeitig kommt es bei der chemischen Vernetzung in vielen Fällen, insbesondere wenn die chemische Vernetzung nicht strahlungsbasiert induziert wird, sondern beispielsweise durch zugegebenen chemischen Vernetzer in der Haftklebemasse befördert oder bewirkt wird, schon während der Verarbeitung der Haftklebemasse, beispielsweise bei der Herstellung des bahnförmigen Ausgangsverbundes, potentiell zu einer geringfügigen Vernetzung, sodass der Fachmann in vielen Fällen nicht erwarten würde, dass es sich bei der im Ausgangsverbund eingesetzten Haftklebemasse um eine vollständig chemisch unvernetzte Haftklebemasse handelt, obwohl er im Moment des Verstreckens ein möglichst niedriges Ausmaß der chemischen Vernetzung anstreben wird.

In Verfahrensschritt b) wird der Ausgangsverbund in die auch als Streckwerk bezeichnete Streckanordnung eingebracht, wobei der bahnförmige Ausgangsverbund mit einer ersten Geschwindigkeit v₁ geführt wird, was über eine erste Führungsanordnung realisiert wird. Diese erste Führungsanordnung kann dabei beispielsweise eine Vielzahl von Rollen, Walzen oder ähnlichen Elementen enthalten, die der Bewegung des bahnförmigen Ausgangsverbundes in Bahnrichtung dienen. In einer der einfachsten Ausgestaltungen kann der bahnförmige Ausgangsverbund über eine angetriebene Walze geführt werden, die den Ausgangsverbund auf Seiten der ersten Trägerschicht kontaktiert.

Wie nachfolgend eingehender erläutert, wird die Haftklebemasse anschließend von der ersten Trägerschicht abgezogen. Dies funktioniert besonders gut, wenn der Ausgangsverbund in dem Bereich, in dem das Abziehen erfolgt, über eine Krümmung geführt wird, die ein tangentiales Ablösen ermöglicht, wie es beispielsweise durch die vorstehend angeführte Walze, aber auch durch eine sogenannte Ablösekante erreicht werden kann, die vom Fachmann teilweise auch als Dekaschierschwert bezeichnet wird. Bei solchen Ausgestaltungen lässt sich der Verfahrensschritt c) besonders gut und besonders präzise realisieren, wobei insbesondere nicht die Verbundfestigkeit zwischen Klebeschicht und erster Trägerschicht vorzeitig aufgelöst wird, d.h. dass sich das Abziehen nicht durch den Ausgangsklebeverbund entgegen der Bahnrichtung fortsetzen kann. Von den beiden beschriebenen Ausgestaltungen ist insbesondere der Einsatz von Führungswalzen besonders vorteilhaft, wobei eine besonders kontrollierte Verfahrensführung dann erhalten wird, wenn auf beiden Seiten des Ausgangsverbundes eine Führungswalze angeordnet wird, durch die der Ausgangsverbund hindurchgeführt wird, sodass dieser eine Stabilisierung erhält, wobei es in diesem Fall zweckmäßig ist, eine weitere Trägerschicht vorzusehen, wie es nachfolgend offenbart wird. Bevorzugt ist entsprechend ein erfindungsgemäßes Verfahren, wobei die Führungsanordnung eine oder mehrere, bevorzugt zwei oder mehr, besonders bevorzugt genau zwei, Führungswalzen oder eine Ablösekante, umfasst, und/oder wobei der Ausgangsverbund zum Zeitpunkt des Abziehens der Haftklebemasse über eine Führungswalze oder eine Ablösekante geführt wird, wobei der Ausgangsverbund bevorzugt zwischen zwei Führungswalzen hindurchgeführt wird.

In der besonders bevorzugten Ausführungsform kann die Geschwindigkeit v₁ vorteilhafterweise durch die Rotation der Führungswalzen bedingt werden. Bevorzugt ist deshalb ein erfindungsgemäßes Verfahren, wobei die oberflächliche Tangentialgeschwindigkeit der Führungswalzen der Geschwindigkeit v₁ entspricht, und/oder wobei die Geschwindigkeit v₁ des Ausgangsverbunds durch die Rotation der Führungswalzen bedingt wird.

Als Führungswalzen können insoweit typische Walzen eingesetzt werden, wie sie auch aus anderen Bereichen der Verarbeitung von Haftklebemassen bekannt sind. Beispielhaft ist ein erfindungsgemäßes Verfahren, wobei zumindest eine der Führungswalzen, bevorzugt sämtliche Führungswalzen, einen Durchmesser im Bereich von 25 bis 200 mm, bevorzugt im Bereich von 50 bis 100 mm, aufweist, und/oder wobei zumindest eine der Führungswalzen, bevorzugt sämtliche Führungswalzen, einen Durchmesser im Bereich von 0,025*b bis 0,2*b, bevorzugt im Bereich von 0,05*b bis 0,1 *b, aufweist, wobei b die Bahnbreite der Führungswalzen ist, wobei b besonders bevorzugt im Bereich von 0,5 bis 2,5 m, ganz besonders bevorzugt im Bereich von 1,0 bis 2,0 m, liegt. Die vorstehend definierten Durchmesser ermöglichen es insbesondere, für das Rotationselement der zweiten Führungsanordnung auch größere Durchmesser von beispielsweise bis zu 500 mm einzusetzen. Umgekehrt ist es beim Einsatz von Führungswalzen mit einem größeren Durchmesser von beispielsweise bis zu 500 mm bevorzugt, den Durchmesser des Rotationselements kleiner zu wählen, wie es nachfolgend beschrieben ist. Hierbei ist es bevorzugt, wenn der Durchmesser der Führungswalze der ersten Führungsanordnung größer ist als der Durchmesser des Rotationselements.

Beim Einsatz einer Führungswalze wird diese vom Ausgangsverbund zielführenderweise über die erste Trägerschicht kontaktiert, um ein freies Abziehen der Haftklebemasse zu ermöglichen und gleichzeitig eine Verschmutzung der Führungswalze durch die dazwischen liegenden Trägerschicht zu verhindern. Entsprechend ist es beim Einsatz von zwei gegenüber angeordneten Führungswalzen zielführend, auch die zweite Führungswalze vor einem unmittelbaren Kontakt mit der Haftklebemasse durch den Einsatz einer weiteren Trägerschicht zu schützen. Bevorzugt ist folglich ein erfindungsgemäßes Verfahren, wobei der bahnförmige Ausgangsverbund eine auf der von der ersten Trägerschicht abgewandten Seite der Ausgangsklebeschicht angeordnete bahnförmige dritte Trägerschicht umfasst. Bevorzugt ist entsprechend auch ein erfindungsgemäßes Verfahren, wobei die Ausgangsklebeschicht in Verfahrensschritt b) zwischen der ersten Trägerschicht und der dritten Trägerschicht geführt wird, bevorzugt zwischen zwei Führungswalzen, und wobei die dritte Trägerschicht vor dem Übertragen der Haftklebemasse von der Ausgangsklebeschicht entfernt wird.

Die erste Trägerschicht kann, ebenso wie eine gegebenenfalls vorhandene dritte Trägerschicht, durch typische Prozessliner gebildet werden, die im Bereich der Klebtechnik regelmäßig zum Einsatz kommen und die dem Fachmann aus dem Stand der Technik umfassend bekannt sind. Bevorzugt ist dabei ein erfindungsgemäßes Verfahren, wobei die erste Trägerschicht und/oder die dritte Trägerschicht, bevorzugt die erste Trägerschicht und die dritte Trägerschicht, ein oder mehrere Materialien umfasst, die ausgewählt sind aus der Gruppe bestehend aus Polyethylen, Polypropylen, Polyethylenterephthalat, Papier und Kombinationen dieser Materialien, wobei die erste Trägerschicht bevorzugt aus diesen Materialien besteht. Bevorzugt ist ein erfindungsgemäßes Verfahren, wobei die erste Trägerschicht und/oder die dritte Trägerschicht, bevorzugt die erste Trägerschicht und die dritte Trägerschicht, eine mittlere Dicke im Bereich von 20 bis 150 µm, bevorzugt im Bereich von 30 bis 125 µm, besonders bevorzugt im Bereich von 40 bis 100 µm, aufweist.

In der vorstehend beschriebenen Ausgestaltung unter Verwendung von Prozesslinern kann als nachteilig angesehen werden, dass, selbst bei einer teilweisen Wiederverwertung dieser Prozessliner, ein gesteigerter Materialbedarf entsteht und Abfall generiert wird, der eigentlich idealerweise vermieden werden sollte. Ein besonderer Vorteil des erfindungsgemäßen Verfahrens ist nunmehr darin zu sehen, dass im Rahmen der Verstreckung erfindungsgemäß ohnehin ein komplettes Ablösen von den Prozesslinern, d.h. von der ersten bzw. dritten Trennschicht, vorgesehen ist, sodass weder die erste Trägerschicht noch die dritte Trägerschicht für den Einsatz im späteren Haftklebeband notwendig sind. In synergistischer Weise ermöglicht dies eine Ausgestaltung der ersten Führungsanordnung, in der nämlich statt einem herkömmlichen Prozessliner die Trägerschichten durch ein umlaufendes Gurtband oder eine vergleichbare wiederverwertbare Anordnung gebildet werden können, welche zusammen mit der Klebeschicht den Ausgangsverbund bilden und von dem die Haftklebemasse in Verfahrensschritt c) abgezogen wird. Hierdurch lassen sich vorteilhafterweise große Material- und Abfalleinsparungen erzielen, ohne dass die Qualität der herstellbaren Haftklebebänder dadurch nachteilig beeinflusst wird. Explizit bevorzugt ist entsprechend ein erfindungsgemäßes Verfahren, wobei die erste Führungsanordnung eine oder mehrere, bevorzugt zwei oder mehr, Führungswalzen umfasst, wobei die erste Trägerschicht und/oder die dritte Trägerschicht, bevorzugt die erste Trägerschicht und die dritte Trägerschicht, durch ein die Führungswalzen umlaufendes Gurtband gebildet werden, wobei das Gurtband bevorzugt aus Stahl und/oder Kunststoff ausgebildet ist.

Da es in Verfahrensschritt c) zu einem Abziehen der Haftklebemasse von der ersten Trägerschicht kommt, ist es in allen Fällen bevorzugt, wenn die Trägerschichten mit einer sogenannten Release-Schicht versehen sind, die den Schritt des Abziehens der Haftklebemasse erleichtert, indem die Adhäsion der Klebeschicht an der releasebeschichteten Trägerschicht reduziert wird. Dies ist insbesondere für Verfahren vorteilhaft, in denen nur eine relativ kleine Verstreckung realisiert werden soll, die in einer vergleichsweise geringen Reduktion der Haftklebrigkeit führt, so dass es in vielen Fällen zweckmäßig ist, dass leichte Abziehen der Haftklebemasse auch durch solche zusätzlichen Maßnahmen zu befördern. Eine entsprechende Ausgestaltung ist nach Einschätzung der Erfinder dabei insbesondere bei der Ausgestaltung mit umlaufenden Gurtbändern besonders wichtig, um auch in diesem Fall eine langfristig gute Ablösung der Haftklebemasse zu gewährleisten. Bevorzugt ist entsprechend ein erfindungsgemäßes Verfahren, wobei die erste Trägerschicht und/oder die dritte Trägerschicht, bevorzugt die erste Trägerschicht und die dritte Trägerschicht, an der der Haftklebemasse zugewandten Seite mit einer Releaseschicht beschichtet ist, bevorzugt mit einer Silikon-Releaseschicht, wobei die Silikon-Releaseschicht bevorzugt herstellbar ist durch Vernetzung eines vernetzbaren Silikonsystems umfassend ein oder mehrere Polysiloxane.

In Verfahrensschritt c) des erfindungsgemäßen Verfahrens erfolgt das Abziehen der Haftklebemassen von der ersten Trägerschicht, sodass der Ausgangsverbund aufgelöst wird. Die abgezogene Haftklebemasse wird auf eine bahnförmige zweite Trägerschicht übertragen, sodass ein zweiter Verbund erhalten wird, der im Rahmen der vorliegenden Erfindung als Klebeverbund bezeichnet wird. Erfindungsgemäß wird die zweite Trägerschicht und damit nach dem Übernehmen der abgezogenen Haftklebemasse auch der bahnförmige Klebeverbund mit einer zweiten Geschwindigkeit v₂ geführt, was wiederum durch eine zweite Führungsanordnung realisiert wird. Diese zweite Führungsanordnung umfasst neben potentiellen weiteren Bestandteilen, die grundsätzlich mit denen der ersten Führungsanordnung vergleichbar sein können, beispielsweise Rollen und Aufhängungen, bevorzugt ein Rotationselement, über welches die zweite Trägerschicht geführt wird und das in diesem Fall die eigentliche Verstreckungseinheit darstellt. Auch wenn zumindest prinzipiell Abweichungen von einer idealen Zylindersymmetrie denkbar sind, hat es sich auch für das Rotationselement als bevorzugt erwiesen, dieses als Walze auszuführen. Bevorzugt ist folglich ein erfindungsgemäßes Verfahren, wobei die zweite Führungsanordnung ein, bevorzugt angetriebenes, Rotationselement, bevorzugt eine Walze, umfasst, über das die zweite Trägerschicht geführt wird.

Analog zu den vorstehenden Ausführungen für die Führungswalzen der ersten Führungsanordnung ist es auch bevorzugt, wenn dieses Rotationselement nicht nur der Führung der zweiten Trägerschicht dient, sondern auch die Geschwindigkeit v₂ des Klebeverbundes bedingt, weil es beispielsweise als angetriebenes Rotationselement ausgeführt ist. Bevorzugt ist insoweit ein erfindungsgemäßes Verfahren, wobei die oberflächliche Tangentialgeschwindigkeit des Rotationselements der Geschwindigkeit v₂ entspricht, und/oder wobei die Geschwindigkeit v₂ des Klebeverbundes durch die Rotation des Rotationselements bedingt wird.

Für das Rotationselement kommen insoweit wiederum typische Walzendurchmesser in Betracht, wobei es nach Einschätzung der Erfinder besonders günstig ist, den Durchmesser des Rotationselementes auf den Durchmesser der Führungswalzen in der ersten Führungsanordnung abzustimmen. Beispielhaft ist ein erfindungsgemäßes Verfahren, wobei das Rotationselement einen Durchmesser im Bereich von 50 bis 200 mm, bevorzugt im Bereich von 100 bis 150 mm, aufweist. Bevorzugt ist ein erfindungsgemäßes Verfahren, wobei das Rotationselement einen Durchmesser im Bereich von 0,1*df bis 0,5*df, bevorzugt im Bereich von 0,15*df bis 0,3*df, aufweist, wobei df der Durchmesser der Führungswalze der ersten Führungsanordnung ist.

Zentral für das erfindungsgemäße Verfahren ist, dass die Geschwindigkeit v₂ größer ist als die Geschwindigkeit v₁. Dies bedeutet, dass die zweite Trägerschicht und damit der Klebeverbund in Bahnrichtung schneller laufen als die erste Trägerschicht und der Ausgangsverbund. Durch dieses Geschwindigkeitsverhältnis wird die abgezogene Haftklebemasse beim Übertragen verstreckt und durch das Voreilen der zweiten Führungsanordnung infolge der Verstreckung in der Dicke reduziert. Das Ausmaß der Dickenreduktion korreliert dabei vorteilhafterweise mit dem eingestellten Geschwindigkeitsverhältnis, sodass die Reduktion der Dicke in etwa dem Kehrwert des Geschwindigkeitsverhältnisses D₂/D₁ ≈ V₁/V₂ entspricht. Vorteilhafterweise lassen sich mit dem erfindungsgemäßen Verfahren auch kleine Dickenänderungen realisieren, wenn beispielsweise das Geschwindigkeitsverhältnis nur unwesentlich über 1 liegt. Der Fachmann versteht jedoch, dass sich die erfindungsgemäßen Vorteile besonders deutlich zeigen, wenn das erfindungsgemäße Verfahren unter Einsatz eines deutlich größeren Geschwindigkeitsverhältnisses dazu genutzt wird, eine relativ starke Verringerung der mittleren Dicke zu bewirken. Es kann dabei als Vorteil des erfindungsgemäßen Verfahrens gesehen werden, dass dieses hinsichtlich der realisierbaren Geschwindigkeitsverhältnisse sehr flexibel ist. Nach Einschätzung der Erfinder ist es mit Blick auf die Qualität der erhaltenen Klebeschichten jedoch sinnvoll, die Geschwindigkeitsverhältnisse nicht zu groß zu wählen und bei Bedarf das erfindungsgemäße Verfahren vielmehr mehrfach hintereinander durchzuführen, wie es nachfolgend offenbart wird, wenn besonders starke Reduktionen der Schichtdicke erreicht werden sollen, um eine zu starke mechanische Belastung der Klebeschicht beim Abziehen zu vermeiden, die zum Abriss der Klebschicht zwischen den beiden Führungsanordnungen führen kann. Bevorzugt ist ein vor diesem Hintergrund erfindungsgemäßes Verfahren, wobei das Geschwindigkeitsverhältnis v₂/v₁ größer ist als 1,1, bevorzugt größer ist als 2, besonders bevorzugt größer ist als 5, ganz besonders bevorzugt größer ist als 7, insbesondere bevorzugt größer ist als 10. Bevorzugt ist zusätzlich oder alternativ ein erfindungsgemäßes Verfahren, wobei das Geschwindigkeitsverhältnis v₂/v₁ kleiner ist als 35, bevorzugt kleiner ist als 30, besonders bevorzugt kleiner ist als 25, ganz besonders bevorzugt kleiner ist als 20, insbesondere bevorzugt kleiner ist als 15. Bevorzugt ist vor diesem Hintergrund zusätzlich oder alternativ auch ein erfindungsgemäßes Verfahren, wobei die mittlere Dicke der Klebeschicht gegenüber der mittleren Dicke der Ausgangsklebeschicht um 10 % oder mehr, bevorzugt um 30 % oder mehr, besonders bevorzugt um 50 % oder mehr, ganz besonders bevorzugt um 70 % oder mehr, insbesondere bevorzugt um 90 % oder mehr, verringert ist.

Grundsätzlich ist es den Erfindern gelungen, für die Geschwindigkeiten v₁ und v₂ geeignete Bereiche anzugeben, mit denen sich besonders zuverlässig gute Klebeschichten im Klebeverbund erhalten lassen. Bevorzugt ist ein erfindungsgemäßes Verfahren, wobei die Geschwindigkeit v₁ im Bereich von 5 bis 300 m/min, bevorzugt im Bereich von 10 bis 150 m/min, besonders bevorzugt im Bereich von 20 bis 100 m/min, liegt, und wobei die Geschwindigkeit v₂ im Bereich von 10 bis 350 m/min, bevorzugt im Bereich von 20 bis 200 m/min, besonders bevorzugt im Bereich von 30 bis 150 m/min, liegt.

Die Vorteile des erfindungsgemäßen Verfahrens kommen besonders dann zum Tragen, wenn mit diesem auch tatsächlich dünne Klebeschichten hergestellt werden. Bevorzugt ist deshalb ein erfindungsgemäßes Verfahren, wobei die mittlere Dicke der Klebeschicht im Klebeverbund im Bereich von 10 µm bis 2 mm, bevorzugt im Bereich von 20 µm bis 1 mm, besonders bevorzugt im Bereich von 30 µm bis 0,5 mm, liegt, und/oder wobei die mittlere Dicke der Klebeschicht im Klebeverbund 500 µm oder weniger, bevorzugt 200 µm oder weniger, besonders bevorzugt 100 µm oder weniger, beträgt.

Wie vorstehend erläutert, ergibt sich eine besonders schonende Verfahrensführung dann, wenn das erfindungsgemäße Verfahren mehrfach hintereinander durchgeführt wird, sodass ein verstreckter und anschließend relaxierter Klebeverbund erneut als Ausgangsmaterial in ein erfindungsgemäßes Verfahren eingegeben wird, indem dieser wiederum als Ausgangsklebeverbund fungiert und weiter verstreckt wird, um die mittlere Dicke weiter zu reduzieren. Dieses Vorgehen ist besonders vorteilhaft, da das einzelne Ausmaß der Verstreckung durch vergleichsweise kleine Geschwindigkeitsverhältnisse in überschaubarem Maße gehalten wird, sodass eine starke mechanische Belastung der Haftklebemasse vermieden und die Gefahr eines kohäsiven Versagens beim Abziehen oder eines Abrisses beim Verstrecken reduziert wird, wobei gleichzeitig Klebeschichten mit einer geringen Dicke erhalten werden können. Bevorzugt ist deshalb ein erfindungsgemäßes Verfahren, wobei das Herstellen des bahnförmigen Ausgangsverbundes mit einem erfindungsgemäßen Verfahren erfolgt, so dass die mittlere Dicke eines mit einem erfindungsgemäßen Verfahren hergestelltes Haftklebebandes mit dem erfindungsgemäßen Verfahren weiter reduziert wird.

Der Fachmann versteht, dass es durch die vorteilhafte Steuerung der Dickenreduktion über das Geschwindigkeitsverhältnis der Führung in der ersten bzw. zweiten Führungsanordnung besonders leicht möglich ist, die im Verfahren erhaltene Dicke der Klebeschicht gegebenenfalls sogar während des Fertigungsverfahrens schnell und unkompliziert anzupassen. Dadurch ist es besonders leicht möglich, durch eine bloße Verstellung der Verstreckparameter aus dem im Wesentlichen gleichen Ausgangsklebeverbund Klebebänder mit ganz unterschiedlichen Dicken der Klebeschichten zu erhalten. Entsprechend ist es besonders bevorzugt, das erfindungsgemäße Verfahren auch im Wesentlichen ohne apparative Umbauten bei der Herstellung von Klebebändern mit unterschiedlichen mittleren Dicken der Klebeschicht einzusetzen und entsprechend besonders deutlich von den Vorteilen des erfindungsgemäßen Verfahrens zu profitieren. Bevorzugt ist ein erfindungsgemäßes Verfahren, wobei das Verfahren hintereinander zur Herstellung von zwei oder mehreren verschiedenen Haftklebebändern mit gleichartiger Haftklebemasse verwendet wird, deren mittlere Dicke der Haftklebelage sich um 10 % oder mehr, bevorzugt 25 % oder mehr, unterscheidet, wobei die mittlere Dicke der Ausgangsklebeschicht um 5 % oder weniger verändert wird, wobei das Geschwindigkeitsverhältnis v₂/v₁ verändert wird.

Die zweite Trägerschicht kann prinzipiell nach den gleichen Maßgaben ausgestaltet werden, wie sie vorstehend für die erste Trägerschicht bzw. dritte Trägerschicht offenbart werden. Insbesondere ist somit auch eine Ausgestaltung als Gurtband sowie eine Beschichtung mit einer Release-Schicht denkbar. Da die zweite Trägerschicht jedoch, wie vorstehend erläutert, in vielen Fällen den Träger des herzustellenden Haftklebebandes oder einen Liner zur Aufnahme eines trägerloses Haftklebebandes bilden wird, ist die Ausgestaltung als Gurtband für die zweite Trägerschicht weniger bevorzugt, da sich diese wohl eher für spezifische Anwendungen eignen. Bevorzugt ist für den Fall, dass die zweite Trägerschicht als Liner fungieren soll ein erfindungsgemäßes Verfahren, wobei die zweite Trägerschicht, ein oder mehrere Materialien umfasst, die ausgewählt sind aus der Gruppe bestehend aus Polyethylen, Polypropylen, Polyethylenterephthalat, Papier und Kombinationen dieser Materialien, wobei die zweite Trägerschicht bevorzugt aus diesen Materialien besteht. Bevorzugt ist zusätzlich oder alternativ ein erfindungsgemäßes Verfahren, wobei die zweite Trägerschicht, eine mittlere Dicke im Bereich von 20 bis 150 µm, bevorzugt im Bereich von 30 bis 125 µm, besonders bevorzugt im Bereich von 40 bis 100 µm, aufweist. Eher für spezifische Anwendungen bei der Herstellung trägerloser Haftklebebänder bevorzugt ist ein erfindungsgemäßes Verfahren, wobei die zweite Trägerschicht, durch ein die Führungswalzen umlaufendes Gurtband gebildet wird, wobei das Gurtband bevorzugt aus Stahl und/oder Kunststoff oder faserverstärktem Kunststoff ausgebildet ist. Bevorzugt ist sowohl für die Ausgestaltung als Liner als auch als Gurtband ein erfindungsgemäßes Verfahren, wobei die zweite Trägerschicht an der der Haftklebemasse zugewandten Seite mit einer Releaseschicht, bevorzugt einer Silikon-Releaseschicht, beschichtet ist, wobei die Silikon-Releaseschicht besonders bevorzugt herstellbar ist durch Vernetzung eines vernetzbaren Silikonsystems umfassend ein oder mehrere Polysiloxane. Für die Übernahme der zweiten Trägerschicht als Trägerlage eines herzustellenden erfindungsgemäßen Haftklebebandes bevorzugt ist ein erfindungsgemäßes Verfahren, wobei die zweite Trägerschicht, ein oder mehrere Materialien umfasst, die ausgewählt sind aus der Gruppe bestehend aus Polyethylen, Polypropylen, Polyvinylchlorid, Polyestern, insbesondere Polyethylenterephthalat, Polylactiden, Polyamiden, Cycloolefin-Copolymeren Papier, Gewebe und Vliesstoff, wobei die zweiten Trägerschicht in diesem Fall bevorzugt auf der der Haftklebeschicht zugewandten Seite keine Releaseschicht umfasst.

In Verfahrensschritt c) wird die Haftklebemasse wie vorstehend beschrieben übertragen, wobei gegenüber dem Ausgangsklebeverbund ein neuer Klebeverbund entsteht. In Übereinstimmung mit dem fachmännischen Verständnis bedeutet dies, dass die abgezogene, nunmehr verstreckte Haftklebemasse und die zweite Trägerschicht in diesem Klebeverbund in irgendeiner Weise miteinander verbunden sind. Es bedeutet jedoch nicht zwangsläufig, dass es eine unmittelbare Verbindung zwischen der abgezogenen Haftklebemasse und der zweiten Trägerschicht geben muss. Vielmehr ist es auch möglich, dass die Klebeschicht neben einer ersten Haftklebemasse auch eine darüber angeordnete zweite Haftklebemasse, ggf. sogar als eigene Klebeschicht, umfasst und dass die zweite Haftklebemasse im hergestellten Klebeverbund den Kontakt zwischen der ersten Haftklebemasse und der zweiten Trägerschicht vermittelt. Gleichzeitig bedeutet die vorstehende Definition auch nicht, dass in Verfahrensschritt c) ausschließlich die Haftklebemasse übertragen wird. Sofern die Haftklebemasse von der ersten Trägerschicht abgezogen wird, können mit ihr auch weitere Teile der Ausgangsklebeschicht abgezogen werden, insbesondere weitere Schichten an anderen Haftklebemassen sowie auch etwaige zusätzliche Schichten, welche im Inneren der Haftklebemasse oder auf der von der ersten Trägerschicht abgewandten Seite angeordnet sein können, sogar wenn diese die Haftklebemasse in der Klebeschicht in zwei Teile trennen. Beispielsweise ist es möglich, dass eine Haftklebemasse durch eine Innenlage in zwei Teilmassen unterteilt wird, von der eine als Haftklebemasse von der ersten Trägerschicht abgezogen ist, während die andere Teilmasse den Kontakt zu der zweiten Trägerschicht herstellt. Da die Haftklebemasse beim Übertragen jedoch verstreckt wird, ist es sinnvoll, in diesem Fall, der in der Praxis wohl eher für sehr spezifische Anwendungen relevant sein wird, auch etwaig vorhandene Innenlagen aus einem dehnbaren Material auszubilden, wobei der Fachmann die Dehnbarkeit der Innenlage in der Praxis funktional auf die im erfindungsgemäßen Verfahren angestrebte Verstreckung der Haftklebemasse abstimmt, so dass die Innenlage diese Verstreckung nicht oder nicht wesentlich behindert. Bevorzugt ist für bestimmte Anwendungen somit ein erfindungsgemäßes Verfahren, wobei die Ausgangsklebeschicht eine oder mehrere bahnförmige Innenlagen umfasst, die zumindest teilweise in der Haftklebmasse eingebettet sind, wobei die Innenlagen zusammen mit der Haftklebemasse abgezogen und übertragen werden, wobei die Innenlagen aus einem dehnbaren Material bestehen.

Wie vorstehend erläutert, stellt die Haftklebrigkeit von Haftklebemassen bei der Verarbeitung teilweise ein Problem dar, welches die einfache Adaption von anderen Verfahren der Kunststoffverarbeitung erschweren kann. Im Rahmen der der Erfindung zugrundeliegenden Entwicklung hatten die Erfinder zunächst angenommen, dass eine Dickenreduktion durch Verstreckung daran scheitern wird, dass die Haftklebemasse auch bei ausgezeichnet ausgewählten Release-Beschichtungen der Trägerschichten zu stark an diesen haften, um eine reproduzierbare Produktqualität zu ermöglichen und Materialfehler beim Abziehen zuverlässig zu verhindern. Insoweit war es besonders überraschend, dass eine Verstreckung mit dem erfindungsgemäßen Verfahren überraschenderweise möglich ist. Hierbei kommt insbesondere bei großen Streckraten zum Tragen, dass das Verstrecken der Haftklebemasse deren Haftklebrigkeit reduziert bzw. eine Anisotropie der Haftklebrigkeit induziert und dadurch das Abziehen in zuverlässiger Weise befördert, so dass das Abziehen zusammen mit der beim Verstrecken erzeugten Spannung in der Haftklebemasse das Abziehen der Haftklebemasse befördert bzw. bewirkt. Das nachgelagerte Relaxieren der verstreckten Haftklebemasse dient dann dem Abbau von Spannungen in der Klebeschicht und der Rückgewinnung der gewünschten Haftklebrigkeit bzw. der Wiederherstellung der Isotropie, sodass auf einen Effekt zurückgegriffen werden kann, wie er beispielsweise von Klebestreifen für die Befestigung von Wandelementen bekannt ist, die beispielsweise unter dem Namen "Tesa Powerstrips" am Markt verfügbar sind. Insbesondere handelt es sich also um ein erfindungsgemäßes Verfahren, wobei das Abziehen der Haftklebemasse durch das Verstrecken der Haftklebemasse in der Form befördert oder bewirkt, bevorzugt befördert, wird, dass die Adhäsion der Haftklebemasse an der ersten Trägerschicht durch das Verstrecken verringert wird.

Wie vorstehend erläutert, ist der Einsatz von Führungswalzen bzw. von sogenannten Ablösekanten zur Umsetzung eines besonders präzisen Abziehens in Verfahrensschritt c) bevorzugt. Hierdurch ist es möglich, dass das Abziehen bzw. das Übertragen jeweils im Wesentlichen tangential zum Radius der Krümmung erfolgt, wodurch ein optimales Abziehen erreicht wird. Besonders bevorzugt ist dabei ein erfindungsgemäßes Verfahren, wobei der Ausgangsverbund zum Zeitpunkt des Abziehens der Haftklebemasse über eine Führungswalze oder eine Ablösekante geführt wird und wobei die erste Trägerschicht und die zweite Trägerschicht relativ zueinander so geführt werden, dass die Haftklebemasse im Wesentlichen tangential abgezogen wird, wobei die Haftklebemasse bevorzugt zudem tangential auf die zweite Trägerschicht aufgelegt wird. Bevorzugt ist in anderen Worten ein erfindungsgemäßes Verfahren, wobei die erste Trägerschicht und die zweite Trägerschicht relativ zueinander so geführt werden, dass die Ausgangsklebeschicht beim Übertragen im Wesentlichen tangential von der ersten Trägerschicht abgezogen wird.

Die Erfinder schlagen insoweit vor, dass die Strecklänge, d. h. die Länge des zwischen der ersten Führungsanordnung bzw. der ersten Trägerschicht und der zweiten Führungsanordnung bzw. der zweiten Trägerschicht, d. h. ohne Kontakt zu einer Trägerschicht, verlaufenden, gestreckten Haftklebemasse, möglichst kurz gewählt wird, zumindest so kurz, wie es der apparative Aufbau ermöglicht, um die Gefahr einer Reduktion der Bahnbreite beim Verstrecken (sogenanntes "neck-in") zu vermeiden und die gewünschte Längsstreckung in Bahnrichtung zu befördern. Bevorzugt ist insoweit ein erfindungsgemäßes Verfahren, wobei in Verfahrensschritt c) die Strecklänge der abgezogenen und übertragenen Haftklebemasse zwischen der ersten Führungsanordnung und der zweiten Führungsanordnung, gemessen entlang der zwischen den Führungsanordnungen gestreckten Haftklebemasse, im Bereich von 0,5*r bis 10*r, bevorzugt im Bereich von 0,7*r bis 5*r, besonders bevorzugt im Bereich von 0,9*r bis 2,5*r liegt, wobei r der Radius des Rotationselements der zweiten Führungsanordnung ist.

In Verfahrensschritt d) des erfindungsgemäßen Verfahrens wird die Haftklebemasse nach dem Verstrecken relaxiert, um die durch das Verstrecken bewirkte Orientierung der (Co-)Polymer-Stränge im Material aufzulösen und dadurch die Haftklebrigkeit der Haftklebemasse bzw. allgemein die Isotropie der makroskopischen Eigenschaften der Haftklebemasse möglichst weitgehend wiederherzustellen. In der Praxis ist hierbei häufig schon eine Relaxation bei Umgebungsbedingungen, d.h. bei Raumtemperatur, ausreichend.

Zur Beschleunigung der Relaxation schlagen die Erfinder dabei vor, die Haftklebemasse während des Relaxierens zu temperieren, beispielsweise mit einem Heizelement, wobei dieser Schritt insbesondere dann empfehlenswert ist, wenn eine Haftklebemasse eingesetzt wird, welcher auf Synthesekautschuken als (Co-)Polymer basiert, da diese bei Raumtemperatur in vielen Fällen ein unzureichendes, d. h. zu langsames, Relaxationsverhalten zeigen, um eine hinreichende Relaxation im Rahmen der üblichen Verarbeitungszeiten zu erreichen. In besonders bevorzugten Ausgestaltungen durchlaufen die verstreckten Haftklebemassen dabei nicht nur eine Zone mit erhöhter Temperatur, sondern im Rahmen eines mehrstufigen Relaxationsprozesses mehrere hintereinander angeordnete Temperaturzonen mit unterschiedlichen Temperaturen, bspw. in der Form von hintereinander angeordneten Heizelementen. Bevorzugt ist deshalb ein erfindungsgemäßes Verfahren, wobei das Relaxieren der verstreckten Haftklebemasse in Verfahrensschritt d) das Temperieren der Haftklebemasse in der Klebeschicht umfasst, bevorzugt mittels eines Heizelements, insbesondere eines Heizstrahlers oder einer Heizwalze, und/oder wobei das Relaxieren der verstreckten Haftklebemasse in Verfahrensschritt d) durch ein lokales Erwärmen der verstreckten Haftklebemasse in der Klebeschicht befördert oder bewirkt wird. Bevorzugt ist ein erfindungsgemäßes Verfahren, wobei das Relaxieren der verstreckten Haftklebemasse in Verfahrensschritt d) in einem mehrstufigen Relaxationsprozess erfolgt, wobei der mehrstufige Relaxationsprozess bevorzugt das Relaxieren bei zwei oder mehr, bevorzugt drei oder mehr, verschiedenen Temperaturen, bevorzugt Temperaturen von 30 °C oder mehr, umfasst.

Auch wenn, wie vorstehend erläutert, eine zu weitgehende chemische Vernetzung der Haftklebemasse in der Ausgangsklebeschicht vermieden werden soll, ist es mit Blick auf viele Anwendungen für Haftklebebänder bevorzugt, wenn die Haftklebemasse im späteren Haftklebeband vernetzt ist, da dadurch vorteilhafte physikalisch-chemische sowie mechanische Eigenschaften erhalten werden können. Entsprechend ist es vorteilhaft, im erfindungsgemäßen Verfahren vor dem Erhalt des Haftklebebandes eine chemische Vernetzung zu initiieren und/oder eine bereits ablaufende chemische Vernetzung zu befördern und diese Vernetzung soweit laufen zu lassen, dass ein spürbarer Grad der chemischen Vernetzung erreicht wird. Besonders bevorzugt ist deshalb ein erfindungsgemäßes Verfahren, zusätzlich umfassend den Verfahrensschritt:
e) Chemisches Vernetzen der chemisch zumindest teilweise unvernetzten Haftklebemasse in der Klebeschicht zum Erhalt einer chemisch vernetzten Klebeschicht.

Hierbei stellt der Fachmann zweckmäßigerweise den Vernetzungsgrad ein, der für die jeweilige Anwendung des Haftklebebandes angestrebt wird. Die (Co- )Polymere der Haftklebemasse werden somit in einem Ausmaß miteinander vernetzt, dass die physikalisch-chemischen Eigenschaften den für die Anwendung notwendigen Anforderungen in gewünschter Weise entsprechen, insbesondere durch eine spezifische Kohäsion, Scherfestigkeit oder Wärmescherfestigkeit.

Wie vorstehend erläutert, bedingt die Verstreckung der Haftklebemasse eine Verringerung der haftklebrigen Eigenschaften, wobei ein hoher chemischer Vernetzungsgrad der verstreckten Haftklebemasse potentiell einer effizienten Relaxation des Systems entgegenstehen kann und dieses sozusagen im verstreckten Zustand fixiert. Daher ist es zielführend, die Haftklebemasse vor bzw. während des Vernetzens weitgehend zu relaxieren. Bevorzugt ist entsprechend ein erfindungsgemäßes Verfahren, wobei das chemische Vernetzen in Verfahrensschritt e) so erfolgt, dass die makroskopischen Eigenschaften der chemisch vernetzten Klebeschicht im Wesentlichen den makroskopischen Eigenschaften einer Vergleichsklebeschicht entsprechen, die bei ansonsten gleichen Merkmalen, insbesondere bezüglich der eingesetzten Materialien und der Schichtdicke, zuvor nicht verstreckt wurde.

Insbesondere für Hochleistungsanwendungen bevorzugt ist ein erfindungsgemäßes Verfahren, bei dem die chemische Vernetzung durch Strahlenvernetzung initiiert wird, da eine solche strahlenbasierte Vernetzung eine besonders präzise Initiation der chemischen Vernetzung und entsprechend vorher die zuverlässige Einstellung eines hohen Relaxationsgrades ermöglicht.

Aus verfahrenstechnischer Sicht ist es jedoch regelmäßig effizienter, wenn die chemische Vernetzung in Verfahrensschritt e) unter Einsatz einer thermisch induzierten und/oder beförderten chemischen Vernetzung erfolgt, wie sie beispielsweise durch die Zugabe eines geeigneten chemischen Vernetzers erreicht werden kann. Diese Zugabe erfolgt in der Praxis jedoch in der überwiegenden Zahl der Fälle bereits in der Haftklebemasse des Ausgangsverbundes. Entsprechend wird es, wie auch vorstehend beschrieben, bereits vor und während der Verstreckung bzw. der anschließenden Relaxation zu einer zumindest teilweisen Anvernetzung der Haftklebemasse kommen. Auch in diesem Falle wird das Verfahren vom Fachmann beispielsweise durch die Wahl des chemischen Vernetzers und/oder dessen Konzentration darauf abgestimmt, dass die Haftklebemasse in dem Moment, indem die chemische Vernetzung einer weiteren Relaxation entgegensteht, hinreichend relaxiert ist, um eine gewünschte Isotropie der makroskopischen Eigenschaften zu ermöglichen. Der Fachmann versteht jedoch, dass in vielen Fällen der chemischen Vernetzung mittels eines chemischen Vernetzers die Schritte des Relaxierens und des Vernetzens im Wesentlichen zeitgleich ablaufen. Bevorzugt ist ein erfindungsgemäßes Verfahren, wobei die Verfahrensschritte d) und e) zumindest teilweise gleichzeitig durchgeführt werden. Bevorzugt ist ein erfindungsgemäßes Verfahren, wobei das Vernetzen der chemisch zumindest teilweise unvernetzten Haftklebemasse in Verfahrensschritt e) unter Verwendung eines oder mehrerer Vernetzer erfolgt, wobei der Vernetzer bevorzugt ausgewählt ist aus der Gruppe bestehend aus chemischen Vernetzern, und/oder wobei die chemisch zumindest teilweise unvernetzten Haftklebemasse einen oder mehrere Vernetzter umfasst, wobei der Vernetzer bevorzugt ausgewählt ist aus der Gruppe bestehend aus chemischen Vernetzern.

Der Vorgang der chemischen Vernetzung von Haftklebemassen an sich ist dem Fachmann im Bereich der Klebtechnik wohl vertraut. Die hierfür eingesetzten chemischen Vernetzer sind kommerziell erhältlich und werden vom Fachmann in der Praxis auf das zu vernetzende System, d. h. zumeist die eingesetzten (Co- )Polymere, abgestimmt, wobei in vielen Fällen Kombinationen von (Co- )Polymeren und spezifischen Vernetzern von Herstellern gemeinsam angeboten werden. Angesichts des Umstandes, dass die vorliegende Erfindung nicht auf spezifische Klebemassen beschränkt ist, kann auch eine breite Palette an möglichen Vernetzern in Frage kommen. Da der Fokus der vorliegenden Erfindung auf der Verarbeitung von Klebeschichten liegt, wird an dieser Stelle hinsichtlich der Vernetzer auf den dem Fachmann bekannten Stand der Technik verwiesen, auf den der Fachmann nach Belieben zurückgreifen kann.

Es kann als besonderer Vorteil des erfindungsgemäßen Verfahrens gesehen werden, dass dieses besonders leicht in eine weitgehend kontinuierliche Verfahrensführung zur Produktfertigung integriert werden kann, sodass es mit Blick auf die erzielbaren Durchsätze besonders günstig ist, eine entsprechende Verfahrensführung zu wählen. Bevorzugt ist entsprechend auch ein erfindungsgemäßes Verfahren, wobei das Verfahren als kontinuierliches oder halbkontinuierliches Verfahren betrieben wird.

Der Fachmann versteht, dass aus dem bahnförmigen Charakter der im erfindungsgemäßen Verfahren eingesetzten und verarbeiteten Elemente, insbesondere im Falle einer kontinuierlichen Verfahrensführung eine Ausgestaltung resultiert, in der die einzelnen Verfahrensschritte an unterschiedlichen Abschnitten eines gesamten bahnförmigen Materials, d. h. einer bahnförmigen Klebemasse ausgeführt werden, die an einem Ende des Verfahrens noch der Ausgangsklebeschicht entspricht, und die über einen verstreckten Bereich zwischen den Führungsanordnungen mit einer relaxierten und gegebenenfalls auch vernetzten Klebeschicht im Klebeverbund verbunden ist. Bevorzugt ist entsprechend ein erfindungsgemäßes Verfahren, wobei die Verfahrensschritte b), c) und d), bevorzugt die Verfahrensschritte b), c) und d) sowie e) zeitgleich an unterschiedlichen Abschnitten eines bahnförmigen Materials ausgeführt werden, und/oder wobei die Ausgangsklebeschicht und die Klebeschicht im Verfahren als Teilabschnitte eines bahnförmigen Materials vorliegen.

Bevorzugt ist ein erfindungsgemäßes Verfahren, wobei das erfindungsgemäße Haftklebeband nach Verfahrensschritt d) oder e), bevorzugt nach Verfahrensschritt e), erhalten wird.

Die Erfindung betrifft abschließend auch eine Vorrichtung zur Durchführung des erfindungsgemäßen Verfahrens, umfassend eine erste Führungsanordnung mit zumindest einer Führungswalze zum Führen eines bahnförmigen Ausgangsverbundes und eine von der ersten Führungsanordnung beabstandete zweite Führungsanordnung zur Führung einer bahnförmigen zweiten Trägerschicht, wobei die zweite Führungsanordnung ein angetriebenes Rotationselement umfasst.

Nachfolgend werden bevorzugte Ausführungsformen der Erfindung unter Bezugnahme auf die beiliegenden Figuren näher erläutert und beschrieben. Dabei zeigt:
- Fig. 1: eine schematische Darstellung des erfindungsgemäßen Verfahrens in einer ersten bevorzugten Ausführungsform;
- Fig. 2: eine schematische Darstellung des erfindungsgemäßen Verfahrens in einer zweiten bevorzugten Ausführungsform;
- Fig. 3: eine schematische Darstellung des erfindungsgemäßen Verfahrens in einer dritten bevorzugten Ausführungsform;
- Fig. 4: eine schematische Darstellung des erfindungsgemäßen Verfahrens in einer vierten bevorzugten Ausführungsform; und
- Fig. 5: eine schematische Visualisierung zur Veranschaulichung der Strecklänge zwischen der ersten Führungsanordnung und der zweiten Führungsanordnung.

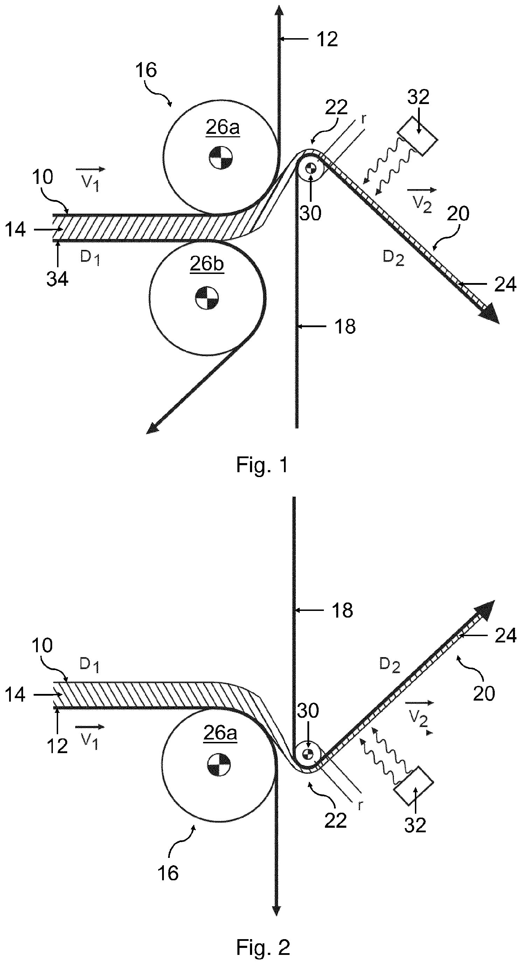

Fig. 1 zeigt eine schematische Darstellung des erfindungsgemäßen Verfahrens zur Herstellung eines erfindungsgemäßen Haftklebebandes in einer bevorzugten Ausführungsform in der Seitenansicht. Das erfindungsgemäße Verfahren startet ausgehend von einem bahnförmigen Ausgangsverbund 10, welcher im gezeigten Beispiel der Fig. 1 mit einem Kalander ausgeformt wurde. Der Ausgangsverbund 10 besteht im gezeigten Beispiel aus einer ersten Trägerschicht 12 und einer dritten Trägerschicht 34, zwischen denen eine Ausgangsklebeschicht 14 angeordnet ist.

Bei der ersten Trägerschicht 12 und der dritten Trägerschicht 34 handelt es sich jeweils um bahnförmige PET-Prozessliner, welche eine mittlere Dicke von etwa 75 µm aufweisen und jeweils mit einer Silikon-Releaseschicht beschichtet sind, um eine leichtere Ablösung der Haftklebemasse zu begünstigen.

Die Ausgangsklebeschicht 14 umfasst eine chemisch zumindest teilweise unvernetzte Haftklebemasse, die im vorliegenden Beispiel als Poly(meth)acrylat-basierte Haftklebemasse ausgeführt ist, welche durch die Zugabe von expandierbaren bzw. expandierten Mikroballons als syntaktisch geschäumte Haftklebemasse ausgeführt ist. Zum Zwecke der späteren Vernetzung umfasst die Haftklebemasse im Beispiel der Fig. 1 einen chemischen Vernetzer, dessen Konzentration so eingestellt wird, dass die chemisch zumindest teilweise unvernetzte Haftklebemasse beim Abziehen eine Relaxationsfähigkeit aufweist, die nahezu der Relaxationsfähigkeit der völlig unvernetzten Haftklebemasse entspricht.

Der Ausgangsverbund 10 wird mit Hilfe einer ersten Führungsanordnung 16 in Bahnrichtung mit der Geschwindigkeit v₁ geführt, wobei die erste Trägerschicht 12 und die dritte Trägerschicht 34 hierfür jeweils über die angetriebenen Führungswalzen 26a, 26b der ersten Führungsanordnung 16 geführt werden.

Hinter den Führungswalzen 26a, 26b wird die Haftklebemasse auf einen schneller laufende zweite Trägerschicht 18 überführt, um einen bahnförmigen Klebeverbund 20 zu erhalten. Hierbei wird die Haftklebemasse im Bereich der Führungswalzen 26a, 26b im Wesentlichen tangential von der ersten Trägerschicht 12 abgezogen. Bedingt durch den Geschwindigkeitsunterschied kommt es dabei zu einer Verstreckung der Haftklebemasse.

Im gezeigten Beispiel ist die zweite Trägerschicht 18 ebenfalls als PET-Prozessliner mit einer mittleren Dicke von etwa 50 µm ausgeführt. Die zweite Trägerschicht 18 wird durch die zweite Führungsanordnung 22 in Bahnrichtung mit der Geschwindigkeit v₂ geführt, wobei als Rotationselement 30 eine angetriebene Walze eingesetzt wird, über die die zweite Trägerschicht 18 läuft.

In Folge der Verstreckung der Haftklebemasse verringert sich die mittlere Dicke, sodass die Dicke der Klebeschicht 24 (D₂) im Klebeverbund 20 im gezeigten Beispiel auf etwa 25 % der Dicke der Ausgangsklebeschicht 14 im Ausgangsverbund (D₁) reduziert ist, was vorliegend durch ein Geschwindigkeitsverhältnis v₂/v₁ von etwa 4 erreicht wird. Durch den vergleichsweise kleinen Streckspalt ergibt sich im gezeigten Beispiel zwischen den Führungswalzen 26a, 26b eine Strecklänge der Haftklebemasse, die etwa dem vierfachen Radius r des relativ kompakt ausgeführten Rotationselements 30 der zweiten Führungsanordnung 22 entspricht. Dadurch kann ein unerwünschtes "neck-in" vermieden werden.

Nach der Übernahme der Haftklebemasse erfolgt der Schritt des Relaxierens, um die durch die Verstreckung bedingte Reduktion bzw. Anisotropie der Haftklebrigkeit sowie die durch das Verstrecken erzeugte Spannung auszugleichen. Im gezeigten Beispiel der Fig. 1 wird die Relaxation der Haftklebemasse im Klebeverbund 20 nach dem Verstrecken durch ein Heizelement 32 unterstützt, welches als Heizstrahler ausgeführt ist, wobei das Relaxieren der verstreckten Haftklebemasse im gezeigten Beispiel so erfolgt, dass die anfängliche Haftklebekraft der unverstreckten Haftklebemasse der Ausgangsklebeschicht in großen Teilen wiederhergestellt und im Wesentlichen isotrope makroskopische Eigenschaften erhalten werden.

Durch die Anwesenheit des chemischen Vernetzers in der Haftklebemasse kommt es zeitgleich mit dem Relaxieren der verstreckten Haftklebemasse in der Klebeschicht 24 zu einer chemischen Vernetzung, die über die Vernetzungszeit beispielsweise so gesteuert werden kann, dass die makroskopischen Eigenschaften der chemisch vernetzten Klebeschicht beim Erreichen des für die Anwendung angestrebten Vernetzungszustands in Folge einer umfassenden Relaxation im Wesentlichen den makroskopischen Eigenschaften einer Vergleichsklebeschicht entsprechen, die bei ansonsten gleichen Merkmalen, insbesondere bezüglich der eingesetzten Materialien und der Schichtdicke, zuvor nicht verstreckt wurde.

In der gezeigten Ausführungsform kann das erfindungsgemäße Verfahren besonders leicht als kontinuierliches oder halbkontinuierliches Verfahren betrieben werden, wobei zum Zwecke einer weiteren Dickenreduktion auch mehrere der in den Figuren gezeigten Streckwerke hintereinander angeordnet werden können, beispielsweise indem ein Streckwerk gemäß Fig. 2 einem Streckwerk gemäß Fig. 1 nachgelagert wird, so dass der Klebeverbund 20 des ersten Streckwerks als Ausgangsverbund 10 im nächsten Streckwerk fungiert.

Fig. 2 zeigt eine weitere schematische Darstellung des erfindungsgemäßen Verfahrens in einer weiteren Ausführungsform. Im Unterschied zur Fig. 1 umfasst die erste Führungsanordnung 16 lediglich eine Führungswalze 26a, wodurch auch auf die dritte Trägerschicht 34 als weiteren Prozessliner verzichtet werden kann. Im gezeigten Beispiel der Fig. 2 ist die erste Trägerschicht 12 als umlaufendes Gurtband ausgeführt, welches mit einer Silikon-Releaseschicht beschichtet ist und auf dem die Ausgangsklebeschicht 14 beispielsweise mit einer üblichen Beschichtungsvorrichtung aufgebracht werden kann.

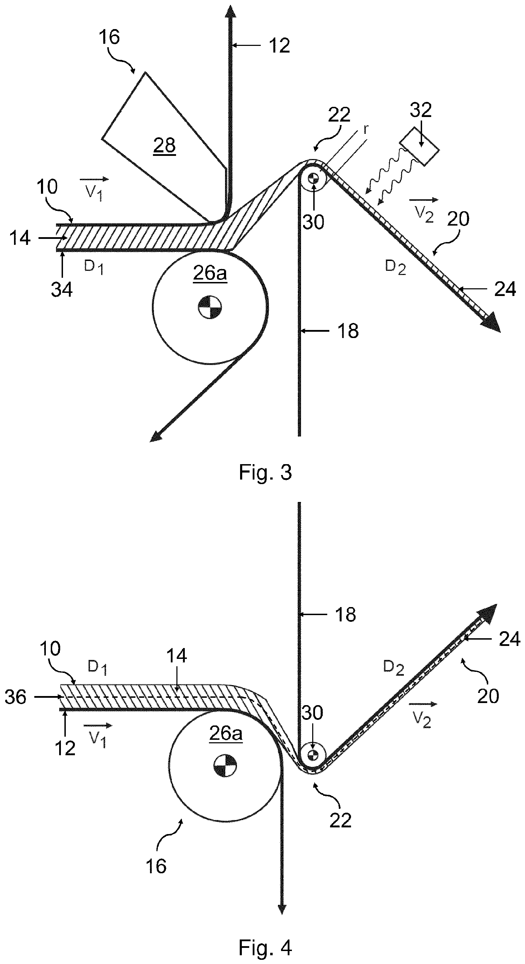

Auch Fig. 3 zeigt eine schematische Darstellung des erfindungsgemäßen Verfahrens in einer weiteren Ausführungsform. Im Unterschied zur Fig. 1 umfasst die erste Führungsanordnung 16 lediglich eine Führungswalze 26a, an Stelle der zweiten Führungswalze 26b jedoch eine Ablösekante 28, um die der PET-Prozessliner als erste Trägerschicht 12 im Bereich des Abziehens der Haftklebemasse herumgeführt wird.

Ausgehend von der Fig. 2 zeigt die Fig. 4 eine Ausführungsform des erfindungsgemäßen Verfahrens, wobei in der Haftklebmasse eine bahnförmige, dehnbare Innenlagen aus einem Kunststoff eingebettet ist, die als gestrichelte Linie eingezeichnet ist und die im erfindungsgemäßen Verfahren mit verstreckt wird.

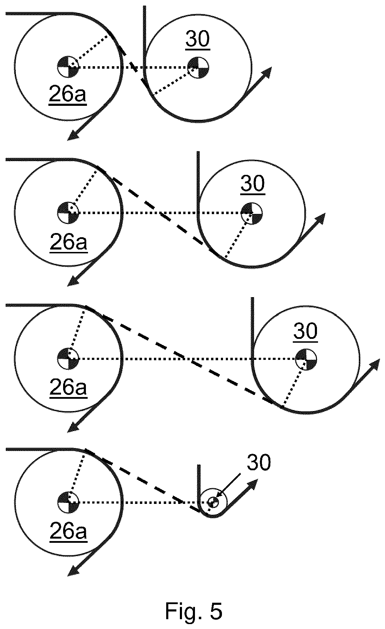

Die Fig. 5 visualisiert abschließend, wie sich im Falle des im Wesentlichen tangentialen Transfers der Haftklebemasse die Strecklänge in Abhängigkeit von der Anordnung der Walzen und des Walzendurchmessers verändert.

### Bezugszeichenliste

- 10: Ausgangsverbund
- 12: Erste Trägerschicht
- 14: Ausgangsklebeschicht
- 16: Erste Führungsanordnung
- 18: Zweite Trägerschicht
- 20: Klebeverbund
- 22: Zweite Führungsanordnung
- 24: Klebeschicht
- 26a-b: Führungswalze
- 28: Ablösekante
- 30: Rotationselement
- 32: Heizelement
- 34: Dritte Trägerschicht
- 36: Innenlage

## Patentansprüche

1. Verfahren zur Herstellung eines Haftklebebandes, umfassend die Verfahrensschritte:
a) Herstellen oder Bereitstellen eines bahnförmigen Ausgangsverbundes (10) umfassend:
i) eine bahnförmige erste Trägerschicht (12), und
ii) eine auf der ersten Trägerschicht (12) angeordnete bahnförmige Ausgangsklebeschicht (14), umfassend eine chemisch zumindest teilweise unvernetzte Haftklebemasse,
b) Führen des Ausgangsverbundes (10) mit einer ersten Führungsanordnung (16), wobei der Ausgangsverbund (10) in Bahnrichtung mit der Geschwindigkeit v₁ geführt wird,
c) Abziehen der Haftklebemasse von der ersten Trägerschicht (12) und Übertragen der abgezogenen Haftklebemasse auf eine bahnförmige zweite Trägerschicht (18) zum Erhalt eines bahnförmigen Klebeverbundes (20), wobei der Klebeverbund (20) mit einer zweiten Führungsanordnung (22) in Bahnrichtung mit der Geschwindigkeit v₂ geführt wird,
wobei das Geschwindigkeitsverhältnis v₂/v₁ größer ist als 1, sodass die Haftklebemasse beim Übertragen zwischen der ersten Trägerschicht (12) und der zweiten Trägerschicht (18) in Folge des Geschwindigkeitsverhältnisses verstreckt wird, sodass im Klebeverbund (20) eine Klebeschicht (24) mit einer gegenüber der Ausgangsklebeschicht (14) verringerten mittleren Dicke erhalten wird,
wobei das Abziehen der Haftklebemasse durch das Verstrecken der Haftklebemasse befördert oder bewirkt wird, und
d) Relaxieren der verstreckten Haftklebemasse in der Klebeschicht (24).

2. Verfahren nach Anspruch 1, wobei die erste Führungsanordnung (16) eine oder mehrere Führungswalzen (26a-b) oder eine Ablösekante (28) umfasst.

3. Verfahren nach einem der Ansprüche 1 oder 2, wobei die zweite Führungsanordnung (22) ein Rotationselement (30), bevorzugt eine Walze, umfasst, über das die zweite Trägerschicht (18) geführt wird.

4. Verfahren nach einem der Ansprüche 1 bis 3, wobei das Geschwindigkeitsverhältnis v₂/v₁ größer ist als 1,1.

5. Verfahren nach einem der Ansprüche 1 bis 4, wobei das Relaxieren der verstreckten Haftklebemasse in Verfahrensschritt d) das Temperieren der Haftklebemasse in der Klebeschicht (24) umfasst, bevorzugt mittels eines Heizelements (32).

6. Verfahren nach einem der Ansprüche 1 bis 5, zusätzlich umfassend den Verfahrensschritt:
e) Chemisches Vernetzen der chemisch zumindest teilweise unvernetzten Haftklebemasse in der Klebeschicht (24) zum Erhalt einer chemisch vernetzten Klebeschicht (24).

7. Verfahren nach einem der Ansprüche 1 bis 6, wobei das Verfahren als kontinuierliches oder halbkontinuierliches Verfahren betrieben wird.

8. Verfahren nach einem der Ansprüche 1 bis 7, wobei das Verfahren hintereinander zur Herstellung von zwei oder mehreren verschiedenen Haftklebebändern mit gleichartiger Haftklebemasse verwendet wird, deren mittlere Dicke der Haftklebelage sich um 10 % oder mehr, bevorzugt 25 % oder mehr, unterscheidet, wobei die mittlere Dicke der Ausgangsklebeschicht (14) um 5 % oder weniger verändert wird, wobei das Geschwindigkeitsverhältnis v₂/v₁ verändert wird.

9. Verfahren nach einem der Ansprüche 1 bis 8, wobei das Herstellen des bahnförmigen Ausgangsverbundes (10) mit einem erfindungsgemäßen Verfahren erfolgt, so dass die mittlere Dicke eines mit einem erfindungsgemäßen Verfahren hergestelltes Haftklebebandes mit dem erfindungsgemäßen Verfahren weiter reduziert wird.

10. Verfahren nach einem der Ansprüche 1 bis 9, wobei der bahnförmige Ausgangsverbund (10) eine auf der von der ersten Trägerschicht abgewandten Seite der Ausgangsklebeschicht (14) angeordnete bahnförmige dritte Trägerschicht (34) umfasst.

11. Verfahren nach einem der Ansprüche 1 bis 10, wobei die erste Führungsanordnung (16) eine oder mehrere Führungswalzen (26a-b) umfasst, wobei die erste Trägerschicht (12) und/oder die dritte Trägerschicht (34), bevorzugt die erste Trägerschicht (12) und die dritte Trägerschicht (34), durch ein die Führungswalzen (26a-b) umlaufendes Gurtband gebildet werden.

12. Verfahren nach einem der Ansprüche 1 bis 11, wobei die erste Trägerschicht (12) und die zweite Trägerschicht (18) relativ zueinander so geführt werden, dass die Ausgangsklebeschicht (14) beim Übertragen im Wesentlichen tangential von der ersten Trägerschicht (12) abgezogen wird.

13. Verfahren nach einem der Ansprüche 1 bis 12, wobei die Ausgangsklebeschicht (14) eine oder mehrere bahnförmige Innenlagen (36) umfasst, die zumindest teilweise in der Haftklebmasse eingebettet sind, wobei die Innenlagen (36) zusammen mit der Haftklebemasse abgezogen und übertragen werden, wobei die Innenlagen (36) aus einem dehnbaren Material bestehen.

14. Haftklebeband hergestellt oder herstellbar mit dem Verfahren nach einem der Ansprüche 1 bis 13, umfassend zumindest eine aus der Klebeschicht (24) abgeleitete Haftklebelage und optional eine Trägerlage oder Trennlage, wobei die Trägerlage oder Trennlage bevorzugt von der zweiten Trägerschicht (18) abgeleitet ist.
